Europäisches Patentamt

European Patent Office

Office européen des brevets

(19)

(11) Veröffentlichungsnummer: **0 210 301**
**B1**

(12) **EUROPÄISCHE PATENTSCHRIFT**

(45) Veröffentlichungstag der Patentschrift:
**13.07.88**

(21) Anmeldenummer: **85116149.7**

(22) Anmeldetag: **18.12.85**

(51) Int. Cl.⁴: **F 16 J 15/32**

(54) **Radialwellendichtring.**

(30) Priorität: **24.07.85 DE 3526424**

(43) Veröffentlichungstag der Anmeldung:
**04.02.87 Patentblatt 87/6**

(45) Bekanntmachung des Hinweises auf die Patenterteilung:
**13.07.88 Patentblatt 88/28**

(84) Benannte Vertragsstaaten:
**AT BE DE FR GB IT NL SE**

(56) Entgegenhaltungen:
**CH - A - 471 992**
**DE - A - 1 954 972**
**DE - A - 3 246 152**
**GB - A - 1 160 605**
**GB - A - 2 040 009**

(73) Patentinhaber: **Firma Carl Freudenberg, Höhnerweg 4,
D-6940 Weinheim/Bergstrasse (DE)**

(72) Erfinder: **Hölzer, Helmut, Hegelstrasse 15,
D-6940 Weinheim (DE)**

(74) Vertreter: **Weissenfeld-Richters, Helga, Dr.,
Höhnerweg 2, D-6940 Weinheim/Bergstrasse (DE)**

## Beschreibung

Die Erfindung betrifft einen Radialwellendichtring, bestehend aus einem Stützring und einem flüssigkeitsdicht und verdrehsicher daran festgelegten, im wesentlichen in axialer Richtung vorspringenden Lippenring, der aus elastischem Werkstoff besteht und der die Welle mit einer elastisch angepressten Dichtfläche berührt, wobei die Dichtfläche auf der dem abzudichtenden Raum zugewandten Seite durch gleichmässig auf dem Umfang verteilte, nur in Richtung des abgedichteten Raumes offene Schmiermitteltaschen unterbrochen ist und wobei die Schmiermitteltaschen in radialer Richtung durch Bodenflächen begrenzt sind und in Umfangsrichtung durch Stauflächen, welche einen spitzen Winkel mit der Oberfläche und der Rotationsachse der Welle einschliessen.

Auf einen Radialwellendichtring der vorgenannten Art nimmt die ED-A 33 963 Bezug. Die Bodenflächen haben dabei einen gleichbleibenden Abstand von der abzudichtenden Welle und sind scharfkantig gegenüber den Stauflächen abgegrenzt. Letztere bilden die Oberfläche von sich parallel zueinander erstreckenden Staurippen und sind der Oberfläche der abgedichteten Welle in allen Teilbereichen mit derselben Neigung zugeordnet. Ihre hydrodynamische Wirksamkeit ist durch diese Ausbildung von der Einhaltung einer bestimmten Drehrichtung der abgedichteten Welle abhängig sowie von einer ganz bestimmten Drehgeschwindigkeit. Abweichungen führen daher in jedem falle zu einer Beeinträchtigung des Abdichtungsergebnisses, beispielsweise zu erhöhtem Verschleiss und/oder zu erhöhter Leckage.

Der Erfindung liegt die Aufgabe zugrunde, einen Radialwellendichtring der eingangs genannten Art derart weiter zu entwickeln, dass sich ein verbessertes Abdichtungsergebnis unabhängig von der Drehrichtung und -geschwindigkeit der abgedichteten Welle ergibt.

Diese Aufgabe wird erfindungsgemäss bei einem Radialwellen — dichtring der eingangs genannten Art dadurch gelöst, dass die Bodenfläche und die Stauflächen einer jeden Schmiermitteltasche gleichmässig ineinander übergehend ausgebildet sind und dass die so gebildete Grundfläche in Richtung des abgedichteten Raumes einen zunehmenden Abstand von der Welle aufweist.

Die Schmiermitteltaschen können bei dem erfindungsgemäss vorgeschlagenen Radialwellendichtring auf der der Welle gegenüberliegenden Seite durch eine kontinuierlich gewölbte Grundfläche begrenzt sein. Diese ist in ihrer Form im Wesentlichen der Gestalt des Ausschnittes einer Zylinder- oder Kegelfläche angenähert, wobei der zugehörige Radius der Wölbung in einem jeden Teilbereich kleiner ist als derjenige der abgedichteten Welle und wobei die Rotationsachse der gewölbten Grundfläche einen spitzen Winkel mit der Wellenachse einschliesst.

Die Schmiermitteltaschen des erfindungsgemäss vorgeschlagenen Radialwellendichtringes sind symmetrisch zunehmend in Richtung des abgedichteten Raumes geöffnet, wodurch sich unabhängig von der Drehrichtung der abgedichteten Welle nur in Abhängigkeit von deren Drehgeschwindigkeit eine Variation des in den Schmiermitteltaschen enthaltenen Schmiermittelvolumens ergibt.

Diese Variation ist dadurch gekennzeichnet, dass in den Schmiermitteltaschen bei niedriger Drehgeschwindigkeit der abgedichteten Welle ein grösseres Schmiermittelvolumen enthalten ist als bei hoher Drehgeschwindigkeit. Die hydrodynamisch wirksame Oberfläche des enthaltenen Schmiermittelvolumens ist dementsprechend grösser und vermag ebenso zuverlässig eine gute Schmierung der Dichtfläche zu gewährleisten wie das bei höheren Drehzahlen verkleinerte, jedoch unter höherem Druck stehende Schmiermittelvolumen.

Die Grundfläche der Schmiermitteltaschen des erfindungsgemäss vorgeschlagenen Radialwellendichtringes geht zweckmässig am Rande einer jeden Schmiermitteltasche gleichmässig in die angrenzende Dichtfläche über. Ein Strömungsabriss unter normalen Betriebsbedingungen wird hierdurch unterbunden und unterstützt wesentlich die Erzielung eines guten Abdichtungsergebnisses.

Die in Umfangsrichtung benachbarten Schmiermitteltaschen können ineinander übergehend ausgebildet sein, was es erlaubt, die sich unter Betriebsbedingungen in den Schmiermitteltaschen ergebenden, hydrodynamisch wirkenden Kräfte besonders gleichmässig auf dem Umfang zu verteilen. Die Erzielung eines verschleissfreien Abdichtungsergebnisses wird hierdurch begünstigt.

Der erfindungsgemäss vorgeschlagene Radialwellendichtring erlaubt es, höhere Drücke weitgehend unabhängig von Drehrichtung und -geschwindigkeit der abgedichteten Welle nahezu verschleissfrei abzudichten. Er ist daher insbesondere für Problemfälle ausgezeichnet geeignet.

Der Lippenring des vorgeschlagenen Radialwellendichtringes lässt sich unter Verwendung an sich bekannter Press-/oder Spritzpressverfahren in gegebenenfalls fertiger Gestalt erzeugen und in demselben Arbeitsgang einstückig mit dem in das Formwerkzeug eingelegten Verstärkungsring verbinden. Dabei gelangen zu seiner Herstellung zumeist vulkanisierbare Werkstoffe zur Anwendung, die während des Pressvorganges zugleich ausvulkanisiert werden. Die hierfür erforderlichen Zeiten können jedoch erheblich sein und beeinträchten die wirtschaftliche Durchführbarkeit des Verfahrens.

Auf ein anderes bekanntes Verfahren zur Herstellung eines Radialwellendichtringes nimmt die DE-C-32 46 152 Bezug. Als Lippenring gelangt in diesem Falle eine schlauchförmige Hülse zur Anwendung, die von einem vorher erzeugten und fertig vulkanisierten Schlauch abgestochen und zur Erzeugung eines Flansches an dem vorderen Ende mit diesem Bereich auf einen sich stetig im Durchmesser erweiternden Formling aufgeschoben wird. Die Festlegung erfolgt anschliessend im Bereich des Flansches, was im Zuge eines weitgehend automatisierbaren Verfahrens in kürzester Zeit möglich ist. Schwierigkeiten bereitet jedoch die Anbringung hydrodynamisch wirkender Rückförderelemente der Innenseite der Dichtlippe.

Es ist bekannt, entsprechende Rückförderelemente durch Einschleifen oder Einpressen auf dem Umfang verteilter Vertiefungen der Dichtlippe zu erzeugen und somit unter Anwendung einer mechanischen Bearbeitung der Oberfläche. Diese ist jedoch nicht nur ausserordentlich kostenaufwendig, sondern zusätzlich problematisch insofern, als bereits geringfügigste Abweichungen der Form oder Gesalt der einzelnen Rückförderelemente von den vorgeschriebenen Werten zu einem deutlich veränderten und zumeist veschlechterten Abdichtungsergebnis führen. Es ist demzufolge ein weiteres Ziel der vorliegenden Erfindung, das aus der DE-C-32 46 152 vorbekannte Verfahren derart weiterzuentwickeln, dass hydrodynamisch wirkende Rückförderelemente auf der Innenseite der Dichtlippe unter Vermeidung der beschriebenen Nachteile erhalten werden.

Die Aufgabe wird erfindungsgemäss unter Verwendung einer einstückig mit dem Lippenring aus elastischem Material erzeugten Dichtlippe schlank vorspringendem Profil dadurch gelöst, dass der Dichtlippe bei ihrer Herstellung durch eine seitlich und/oder auswärts gerichtete Zuordnung zu dem Profil des Lippenringes ein Durchmesser verliehen wird, der grösser ist als der Durchmesser der abzudichtenden Welle, und dass das Profil des Lippenringes vor oder während der Festlegung an den Stützring so um seinen Schwerpunkt verdreht wird, dass der Innendurchmesser des Lippenringes anschliessend kleiner ist als der Durchmesser der abzudichtenden Welle.

Sowohl der Lippenring mit der ringförmig in sich geschlossenen Dichtlippe als auch der Stützring können aus Einzelteilen bestehen, die an sich in einer rotationssystemmetrischen Gestalt erzeugt sind. Die Herstellung sowohl des Stützringes als auch des Lippenringes ist dadurch stark vereinfacht und gewährleistet auf dem gesamten Umfang eine grösstmögliche Kontinuität der Abmessungen und der Elastizität.

Die Dichtlippe bildet vor dem Zusammenfügen der beiden Teile einen seitlich und/oder auswärts gerichteten, umlaufenden Vorsprung des Lippenringes. Sie ist von relativ schlankem Profil und weist einen Innendurchmesser auf, der grösser ist als der Aussendurchmesser der abzudichtenden Welle.

Vor oder während der Festlegung des Lippenringes an dem Stützring wird der Lippenring so um seinen Schwerpunkt verdreht, dass der Innendurchmesser des Lippenringes anschliessend kleiner ist als der Durchmesser des abzudichtenden Welle. Dabei ergibt sich eine Stauchung der Dichtlippe in Umfangsrichtung, die mit zunehmender Entfernung von dem Lippenring eine ausgeprägter in Erscheinung tretende Fältelung zur Folge hat. Die Dichtlippe des fertig montierten Radialwellendichtringes liegt als Folge hiervon nur in dem dem Lippenring zugewandten Bereich durchgehend auf dem gesamten Umfang an der Welle an, wobei die so gebildete Berührungszone zwischen den durch die Fältelung gebildeten Schmiermitteltaschen fingerartige Verlängerungen aufweist, die in Richtung des abgedichteten Raumes vorspringen.

Die Verteilung der Verlängerungen ist auf dem Umfang völlig ausgeglichen, wobei es von hervorzuhebendem Vorteil ist, dass die molekulare Orientierung des die Dichtlippe bildenden, polymeren Werkstoffes einen zur Richtung der Oberfläche des Lippenringes parallelen Verlauf aufweist und dadurch der Richtung der Fältelung folgt. Das Abriebverhalten ist in allen Teilbereichen vollkommen ausgeglichen und die Erzielung einer besonders guten Langlebigkeit begünstigt.

Das Profil der Dichtlippe soll zur Erzielung der Fältelung möglichst lang ausgebildet sein und zweckmässig eine Länge haben, die die grösste Dicke um wenigstens das 2,5fache übertrifft. Grössere Verhältnisse sind möglich, haben jedoch zumeist zu grosse gegenseitige Abstände der einzelnen Falten zur Folge, was zu Undichtigkeiten führen kann. Insbesondere in Fällen, in denen die Innen- und die Aussenseite der Dichtlippe einen parallelen Verlauf haben, tritt dieser Nachteil häufig störend in Erscheinung. Eine Zuspitzung des Profils in Richtung des abgedichteten Raumes ist ebenfalls möglich und ergibt besonders kleine gegenseitige Abstände zwischen den in Umfangsrichtung nebeneinander liegenden Falten. Die sich zugleich ergebende mechanische Schwächung der Dichtlippe ist bei der konkreten Auslegung zu berücksichtigen und schliesst es aus, bestimmte Grenzwerte zu unterschreiten. Sie sind im Einzelfalle zu ermitteln.

Die Dichlippe bildet zweckmässig einen einstückigen Bestandteil des Lippenringes, wobei zu dessen Herstellung nut Werkstoffe mit einer guten Elastizität in die Überlegungen einbezogen werden können. Bevorzugt gelangen gummielastische Werkstoffe zur Anwendung. Nach entsprechender Überprüfung kann jedoch auch PTFE und Polyamid in die Überlegungen mit einbezogen werden.

Der Gegenstand der vorliegenden Erfindung wird nachfolgend anhand der als Anlage beigefügten Zeichnung weiter erläutert.

Es zeigen:

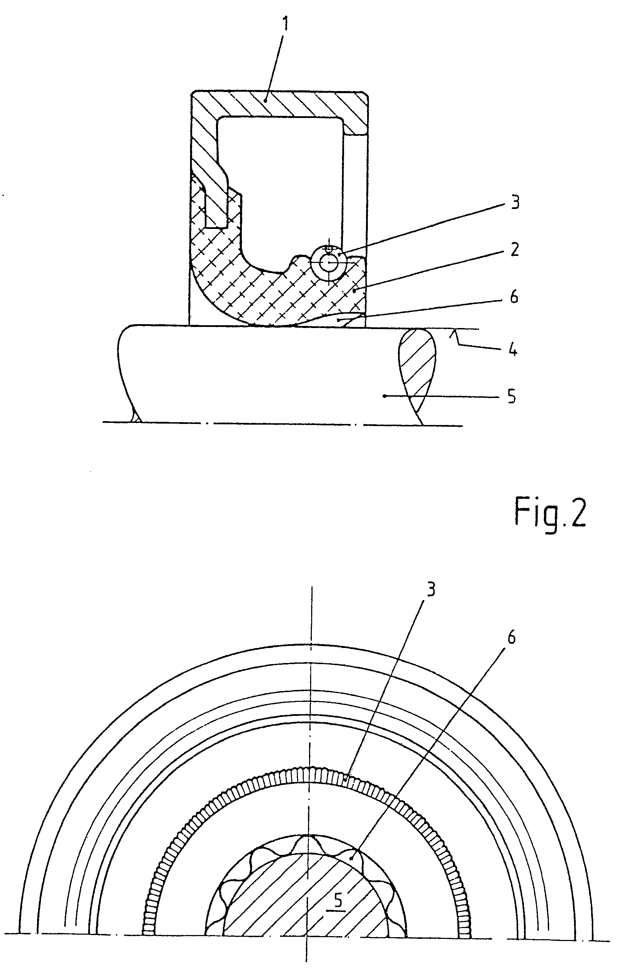

Figur 1 einen Radialwellendichtring der erfindungsgemäss vorgeschlagenen Art in halbgeschnittener Darstellung

Figur 2 den Radialwellendichtring gemäss Figur 1 in Teilansicht von vorn.

Der gezeigte Radialwellendichtring umfasst den Stützring 1 aus einem tiefgezogenen Stahlblech, dessen Profil einen in radialer Richtung nach innen vorspringenden Schenkel aufweist. An diesem ist der im wesentlichen axial in Richtung des abgedichteten Raumes vorspringende Lippenring 2 aus gummielastischem Werkstoff festgelegt. Dieser weist die Dichtfläche 4 auf, welche bei Wellenstillstand unter der Wirkung der Ringwendelfeder 3 elastisch an die Oberfläche der abgedichteten Welle 5 angepresst ist. Die Dichtfläche weist gleichmässig auf den Umfang verteilte, nur in Richtung des abgedichteten Raumes offene Schmiermitteltaschen 6 auf, die in Richtung des umgebenden Bereichs des Lippenringes durch eine einzige, in sich gewölbte Grundfläche begrenzt sind. Die Schmiermitteltaschen haben in Richtung des abgedichteten Raumes einen sich symmetrisch zur Rotationsachse vergrösserten Querschnitt, und die die Schmiermitteltaschen in Umfangsrichtung begrenzenden Teile der Grundflächen sind gegensinnig zum mittleren Bereich gewölbt, wodurch die Grundflächen in dieser Richtung gleichmässig in die Dichtfläche übergehen. Der Wölbungsradius in den beiden Teilbereichen ist in etwa identisch und der gegenseitige Abstand benachbarter Schmiermitteltaschen ist so bemessen, dass sich auch zwischen denselben keine nennenswerte Unterbrechung des Wölbungsverlaufes ergibt. Zur Funktion ist folgendes auszuführen:

Bei niedriger Drehzahl der abzudichtenden Welle sind die Schmiermitteltaschen zu einem hohen Grade mit abzudichtendem Medium gefüllt, beispielsweise einem Schmieröl.

Diesers gelangt unter der Wirkung von Kapillarkräften bis in den engsten Bereich zwischen der eigentlichen Dichtfläche und der Oberfläche der abgedichteten Welle, und somit in einen Bereich, in dem die Grundfläche des Lippenringes 2 und die Oberfläche der abgedichteten Welle einen Winkel von minimaler Grösse einschliessen. Bereits eine Verdrehung der Welle mit minimaler Relativgeschwindigkeit führt hierdurch zum Aufbau grosser, radial nach aussen gerichteter Kräfte, die ein Abheben der Dichtfläche von der Oberfläche der Welle zur Folge haben. Verschleiss wird hierdurch unterbunden. Dennoch kann eine Leckage nicht auftreten, weil der genannte Bereich mit der Rotationsachse und der Richtung des abgedichteten Raumes einen spitzen Winkel einschliesst. Eine mit zunehmender Drehgeschwindigkeit der abzudichtenden Welle zunehmende Rückförderung von in die Schmiermitteltaschen eindringendem Schmierstoff in den abgedichteten Raum ist hiervon die Folge. Sie führt zu einer zunehmenden Verminderung des in den Schmiermitteltaschen enthaltenen Schmierstoffvolumens, wodurch sich eine Kompensation der ansteigenden, spezifischen Kräfte ergibt. Der sich bereits bei geringer Relativgeschwindigkeit der Welle ergebende Abstand zwischen der Dichtfläche und deren Oberfläche bleibt daher auch bei hohen Wellendrehzahlen erhalten. Verschleiss oder eine Undichtigkeit sind daher weder bei einer niedrigen noch bei einer hohen Wellendrehzahl zu erwarten.

**Patentansprüche**

1. Radialwellendichtring, bestehend aus einem Stützring (1) und einem flüssigkeitsdicht und verdrehsicher darin festgelegten, im, wesentlichen in axialer Richtung vorspringenden Lippenring (2), der aus elastischem Werkstoff besteht und der die Wellen mit einer elastisch angepressten Dichtfläche berührt, wobei die Dichtfläche auf der dem abgedichteten Raum zugewandten Seite durch gleichmässig auf den Umfang verteilte, nur in Richtung des abgedichteten Raumes offene Schmiermitteltaschen (6) unterbrochen ist und wobei die Schmiermitteltaschen (6) in radialer Richtung durch Bodenflächen begrenzt sind und in Umfangsrichtung durch Stauflächen, welche einen spitzen Winkel mit der Oberfläche und der Rotationsachse der Welle (5) einschliessen, dadurch gekennzeichnet, dass die Bodenfläche und die Stauflächen einer jeden Schmiermitteltasche (6) gleichmässig ineinander übergehend ausgebildet sind und dass die so gebildeten Grundflächen einen in Richtung des abgedichteten Raumes zunehmenden Abstand von der Welle (5) aufweisen.

2. Radialwellendichtring nach Anspruch 1, dadurch gekennzeichnet, dass die Grundflächen am Rande einer jeden Schmiermitteltasche (6) gleichmässig in die angrenzende Dichtfläche (4) übergehen.

3. Radialwellendichtring nach Anspruch 1 bis 2, dadurch gekennzeichnet, dass die in Umfangsrichtung benachbarten Schmiermitteltaschen (6) gleichmässig ineinander übergehend ausgebildet sind.

4. Verfahren zur Herstellung eines Radialwellendichtringes nach Anspruch 1 bis 3, bei dem ein elastischer Lippenring (2) mit einem Innendurchmesser, der grösser ist als der Durchmesser der abzudichtenden Welle (5), mit einer dünnwandig vorspringenden Dichtlippe versehen und anschliessend an einem Stützring (1) festgelegt wird, dadurch gekennzeichnet, dass der Dichtlippe bei ihrer Herstellung durch eine seitliche und/ oder auswärts gerichtete Zuordnung zu dem Profil des Lippenringes ein Durchmesser verliehen wird, der grösser ist als der Durchmesser der abzudichtenden Welle, und dass das Profil des Lippenringes (2) vor oder während seiner Festlegung an dem Stützring (1) so um seinen Schwerpunkt verdreht wird, dass der Innendurchmesser des Lippenringes (2) anschliessend kleiner ist als der Durchmesser der abzudichtenden Welle (5).

**Claims**

1. A radial shaft sealing ring, composed of a back-up ring (1) and a lip ring (2), which is composed of flexible material, is fixed liquid-tight and torsionally secure in said back-up ring, projects in substantially axial direction and contacts the shaft with a sealing surface pressed flexibly into contact, the sealing surface being interrupted on the side facing the sealed-off space by lubricant reliefs (6), distributed evenly around the periphery and open only in the direction of the sealed-off space, and the lubricant reliefs (6) being bounded in radial direction by bottom surfaces and in circumferential direction by retaining surfaces, which form an acute angle with the surface and the axis of rotation of the shaft (5), characterised in that the bottom surface and the retaining surfaces of each lubricant relief (6) are designed to merge evenly with each other and in that the base surfaces thus formed have an increasing distance from the shaft (5) in the direction of the sealed-off space.

2. A radial shaft sealing ring according to claim 1, characterised in that the base surfaces merge at the edge of each lubricant relief (6) evenly with the adjoining sealing surface (4).

3. A radial shaft sealing ring according to claim 1 or 2, characterised in that the neighbouring lubricant reliefs (6) in circumferential direction are designed to merge evenly with one another.

4. A process for the production of a radial shaft sealing ring according to any of claims 1 to 3, in which a flexible lip ring (2), having an internal diameter which is greater than the diameter of the shaft (5) to be sealed off, is provided with a sealing lip projecting with a thin wall and is subsequently fixed to a back-up ring (1), characterised in that, during its production, the sealing lip is given a diameter which is greater than the diameter of the shaft to be sealed off by a laterally and/or outwardly directed arrangement with respect to the profile of the lip ring, and in that, before or during its fixing to the back-up ring (1), the profile of the lip ring (2) is turned about its centre of gravity such that the internal diameter of the lip ring (2) is subsequently smaller than the diameter of the shaft (5) to be sealed off.

## Revendications

1. Bague d'étanchéité radiale pour arbre, constituée d'une bague de support (1) et d'une bague à lèvre (2) faisant saillie essentiellement en direction axiale, étanche aux liquides et fixée à la bague de support sans possibilité de rotation, cette bague (2) étant réalisée en matériau élastique et venant au contact de l'arbre par une surface d'étanchéité élastiquement pressée contre celui-ci, la surface d'étanchéité étant interrompue sur sa face tournée vers l'enceinte à rendre étanche par des poches à lubrifiant (6) ouvertes uniquement en direction de l'enceinte à rendre étanche, les poches à lubrifiant (6) étant limitées en direction radiale par une surface de base et, en direction périphérique, par des surfaces d'arrêt qui forment un angle aigu avec la surface et l'axe de rotation de l'arbre (5), caractérisée en ce que la surface de base et les surfaces d'arrêt de chaque poche à lubrifiant (6) sont disposées de manière à se prolonger régulièrement l'une l'autre et que les surfaces de base ainsi formées présentent une distance par rapport à l'arbre (5) qui augmente en direction de l'enceinte à rendre étanche.

2. Bague d'étanchéité radiale pour arbre selon la revendication 1, caractérisée en ce que les surfaces de base se prolongent régulièrement par la surface d'étanchéité voisine (4) au bord de chaque poche à lubrifiant (6).

3. Bague d'étanchéité radiale pour arbre selon les revendications 1 et 2, caractérisée en ce que les poches à lubrifiant (6) voisines en direction de la périphérie sont disposées de manière à se prolonger l'une l'autre de manière régulière.

4. Procédé pour fabriquer une bague d'étanchéité radiale pour arbre selon les revendications 1 à 3, dans lequel une bague à lèvre élastique (2) dont le diamètre intérieur est supérieur au diamètre de l'arbre à rendre étanche (5) est pourvue d'une lèvre d'étanchéité à parois minces et en saillie et est fixée ensuite sur une bague du support (1), caractérisé en ce que la lèvre d'étanchéité reçoit un diamètre en cours de fabrication supérieur au diamètre de l'arbre à rendre étanche, grâce à une disposition latérale et/ou tournée vers le haut par rapport au profil de la bague à lèvre, et en ce que le profil de la bague à lèvre (2) subit une rotation, avant ou pendant sa fixation sur la bague de support (1), autour de son centre de gravité, et en ce que le diamètre intérieur de la bague à lèvre (2) est alors plus petit que le diamètre de l'arbre à rendre étanche (5).

Fig.2